# EUROPEAN PATENT APPLICATION

(11) **EP 4 432 766 A1**
(43) Date of publication of application: **18.09.2024**
(21) Application number: 22891659.9
(22) Date of filing: 22.09.2022
(51) Int. Cl.: H04W 76/10, H04W 84/06

(54) **METHOD AND APPARATUS FOR MANAGING NG INTERFACE CONNECTION**

(30) Priority: 09.11.2021 CN 202111320720
(71) Applicant: Datang Mobile Communications Equipment Co., Ltd., Beijing 100085 (CN)
(72) Inventor: WANG, Hucheng, Beijing 100085 (CN)
(74) Representative: Studio Torta S.p.A.
(86) International application number: PCT/CN2022/120553
(87) International publication number: WO 2023/082857

(57) **Abstract**

Embodiments of the present disclosure provide a method and apparatus for managing an NG interface connection. The method is applied to a satellite-borne network device, and comprises: if determining that the service area of an AMF establishing an NG interface connection is not served any more, transmitting a first request to the AMF, and saving the context of the NG interface connection established between the satellite-borne network device and the AMF, wherein the first request is used for instructing to suspend using all or some of the TNLAs of the NG interface. According to the method and apparatus for managing the NG interface connection provided by the embodiments of the present disclosure, under the condition that a data plane and a user plane of the satellite-borne network device are simultaneously located on a satellite, when it is determined, according to the position of the service area of the satellite-borne network device, to suspend using all or some of the TNLAs of the established NG interface, the context of the NG interface is locally saved, the signaling overhead of the NG interface is reduced, the signaling connection establishment of the NG interface is accelerated, and the management of the NG interface connection is facilitated.

## Description

### CROSS-REFERENCE TO RELATED APPLICATION

The present application claims priority to Chinese patent application No. 2021113207202 filed on November 09, 2021, entitled "Method and Apparatus for Managing NG Interface Connection", which is hereby incorporated by reference in its entirety.

### FIELD

The present application relates to the field of radio communication, and in particular to methods and apparatuses for managing next generation (NG) interface connection.

### BACKGROUND

In a 5th generation mobile communication technology (5G) satellite network, if a satellite provides services in a current country, the satellite is required to connect to a terrestrial core network of the current country and broadcast a public land mobile network identification (PLMN ID) of the current country. The above procedure is easy to implement when a control unit (CU) of a base station (for example, gNB) is on the ground. However, if the whole gNB is deployed on an NGSO satellite, that is, both the CU and a data unit (DU) of the gNB are on the satellite, due to gNB movement, the gNB needs to establish a connection with the terrestrial core network of the country through which an orbit of the satellite passes, and radio broadcast information is broadcasted based on configuration information sent from the terrestrial core network. Due to a high moving speed of the satellite, in areas with dense distribution of countries, NG interface associations with the terrestrial core networks of different countries will be established frequently. Besides, since there are a large number of low orbit satellites, core networks of some countries with smaller area will frequently establish transmission layer associations with a satellite gNB. The following drawbacks are brought:
1: frequent NG interface signaling interactions between the gNB and the core network result in significant signaling transmission overhead and signaling processing overhead; and
2: when the gNB starts, it is necessary to re-establish a transmission layer connection, which result in a relatively high latency during a base station starting procedure.

### SUMMARY

For the problems in the related art, embodiments of the present application provide methods and apparatuses for managing next generation (NG) interface connection.

An embodiment of the present application provides a method for managing next generation (NG) interface connection, performed by an on-board network device, including:
transmitting a first request to an access and mobility management function (AMF) in case of determining that the on-board network device that has established an NG interface connection does not serve a service area of the AMF; and
storing a context of the established NG interface connection between the on-board network device and the AMF,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before transmitting the first request to the AMF in case of determining that the on-board network device that has established the NG interface connection does not serve the service area of the AMF, the method further includes:
transmitting an NG interface establishment request to an AMF within a service area of the on-board network device, where the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, determining that the on-board network device that has established the NG interface connection does not serve the service area of the AMF includes one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, where the instruction indicates that the on-board network device no longer serves the AMF.

In an embodiment, the method further includes:
transmitting a second request to the AMF in case that the on-board network device is capable of re-serving the service area of the AMF,
where the second request is used for resuming all or part of previously suspended TNLAs.

In an embodiment, the second request at least includes: a message type, a global radio access network node identifier, or an AMF identifier.

In an embodiment, the suspension of all or part of the TNLAs is stopping transmitting interface signaling and/or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

An embodiment of the present application further provides a method for managing next generation (NG) interface connection, performed by an access and mobility management function (AMF), including:
receiving a first request transmitted from an on-board network device; and
storing a context of an established NG interface connection between the on-board network device and the AMF within a configured time threshold,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before receiving the first request transmitted from the on-board network device, the method further includes:
receiving an NG interface establishment request transmitted from the on-board network device, where the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, the configured time threshold is determined based on ephemeris information of the satellite where the on-board network device is deployed, to indicate when the on-board network device is capable of re-serving the service area of the AMF.

In an embodiment, the method further includes:
receiving a second request transmitted from the on-board network device; and
transmitting a second response message to the on-board network device, where the second response message is used for indicating whether the all or part of the TNLAs are resumed,
where the second request is used for resuming all or part of previously suspended TNLAs.

In an embodiment, the method further includes:
in case of determining that the all TNLAs suspended between the on-board network device and the AMF are resumed,
transmitting a first next generation application protocol (NGAP) message to the on-board network device, where the first NGAP message is used for adding the TNLAs; or
transmitting a second NGAP message to the on-board network device, where the second NGAP message is used for notifying the on-board network device to update a configuration parameter of the NG interface.

In an embodiment, the method further includes:
in case of determining that the part of the TNLAs suspended between the on-board network device and the AMF are resumed,
transmitting a third NGAP message to the on-board network device, where the third NGAP message is used for creating a user signaling TNLA corresponding to the part of the TNLAs, and the third NGAP message is transmitted through the resumed part of the TNLAs.

In an embodiment, the suspension of all or part of the TNLAs is stopping transmitting interface signaling or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

An embodiment of the present application further provides an on-board network device, including a memory, a transceiver and a processor,
where the memory is used for storing a computer program; the transceiver is used for transmitting and receiving data under control of the processor; and the processor is used for reading the computer program in the memory and performing the following operations of:
transmitting a first request to an access and mobility management function (AMF) in case of determining that the on-board network device that has established an NG interface connection does not serve a service area of the AMF; and
storing a context of the established NG interface connection between the on-board network device and the AMF,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before transmitting the first request to the AMF in case of determining that the on-board network device that has established the NG interface connection does not serve the service area of the AMF, the operations further include:
transmitting an NG interface establishment request to an AMF within a service area of the on-board network device, where the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, determining that the on-board network device that has established the NG interface connection does not serve the service area of the AMF includes one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, where the instruction indicates that the on-board network device no longer serves the AMF.

In an embodiment, the operations further include:
transmitting a second request to the AMF in case that the on-board network device is capable of re-serving the service area of the AMF,
where the second request is used for resuming all or part of previously suspended TNLAs.

In an embodiment, the second request at least includes: a message type, a global radio access network node identifier, or an AMF identifier.

In an embodiment, the suspension of all or part of the TNLAs is stopping transmitting interface signaling and/or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

An embodiment of the present application further provides an access and mobility management function (AMF) electronic device, including a memory, a transceiver and a processor,
where the memory is used for storing a computer program; the transceiver is used for transmitting and receiving data under control of the processor; and the processor is used for reading the computer program in the memory and performing the following operations of:
receiving a first request transmitted from an on-board network device; and
storing a context of an established NG interface connection between the on-board network device and the AMF within a configured time threshold,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before receiving the first request transmitted from the on-board network device, the operations further include:
receiving an NG interface establishment request transmitted from the on-board network device, where the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, the configured time threshold is determined based on ephemeris information of the satellite where the on-board network device is deployed, to indicate when the on-board network device is capable of re-serving the service area of the AMF.

In an embodiment, the operations further include:
receiving a second request transmitted from the on-board network device; and
transmitting a second response message to the on-board network device, where the second response message is used for indicating whether the all or part of the TNLAs are resumed,
where the second request is used for resuming all or part of previously suspended TNLAs.

In an embodiment, the operations further include:
in case of determining that the all TNLAs suspended between the on-board network device and the AMF are resumed,
transmitting a first next generation application protocol (NGAP) message to the on-board network device, where the first NGAP message is used for adding the TNLAs; or
transmitting a second NGAP message to the on-board network device, where the second NGAP message is used for notifying the on-board network device to update a configuration parameter of the NG interface.

In an embodiment, the operations further include:
in case of determining that the part of the TNLAs suspended between the on-board network device and the AMF are resumed,
transmitting a third NGAP message to the on-board network device, where the third NGAP message is used for creating a user signaling TNLA corresponding to the part of the TNLAs, and the third NGAP message is transmitted through the resumed part of the TNLAs.

In an embodiment, the suspension of all or part of the TNLAs is stopping transmitting interface signaling or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

An embodiment of the present application further provides an apparatus for managing next generation (NG) interface connection, performed by an on-board network device, including:
a first transmitting module, used for transmitting a first request to an access and mobility management function (AMF) in case of determining that the on-board network device that has established an NG interface connection does not serve a service area of the AMF; and
a first storing module, used for storing a context of the established NG interface connection between the on-board network device and the AMF,
where the first request is used for indicating suspension of all or part of transport network layer associations (TNLAs) on the NG interface.

An embodiment of the present application further provides an apparatus for managing NG interface connection, performed by an access and mobility management function (AMF), including:
a second receiving module, used for receiving a first request transmitted from an on-board network device; and
a second storing module, used for storing a context of an established NG interface connection between the on-board network device and the AMF within a configured time threshold,
where the first request is used for indicating suspension of all or part of transport network layer associations (TNLAs) on the NG interface.

An embodiment of the present application further provides a processor readable storage medium, where the processor readable storage medium stores a computer program for causing a processor to perform the steps of the method for managing next generation (NG) interface connection described above.

In the methods and apparatuses for managing NG interface connection provided by the embodiments of the present application, in case that a data plane and a user plane of the on-board network device are both located on the satellite, the context of the NG interface stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

### BRIEF DESCRIPTION OF THE DRAWINGS

To clearly explain the solutions in embodiments of the present application or the related art, the accompanying drawings used in the embodiments or related descriptions are briefly introduced below. The accompanying drawings in the following description are some embodiments of the present application. For those skilled in the art, other accompanying drawings may be obtained based on these drawings without creative labor.
FIG. 1 is a schematic diagram of a 5G architecture supporting gNB on-board according to the present application;
FIG. 2 is a schematic diagram of a relationship between an gNB on-board and a service area for a terrestrial 5G core network according to the present application;
FIG. 3 is a schematic diagram of interaction between a next generation (NG) radio access network node and an access and mobility management function (AMF) according to the present application;
FIG. 4 is a first flow chart of a method for managing NG interface connection according to an embodiment of the present application;
FIG. 5 is a second flow chart of a method for managing NG interface connection according to an embodiment of the present application;
FIG. 6 is a first implementation schematic diagram of a method for managing NG interface connection according to an embodiment of the present application;
FIG. 7 is a second implementation schematic diagram of a method for managing NG interface connection according to an embodiment of the present application;
FIG. 8 is a third implementation schematic diagram of a method for managing NG interface connection according to an embodiment of the present application;
FIG. 9 is a fourth implementation schematic diagram of a method for managing NG interface connection according to an embodiment of the present application;
FIG. 10 is a schematic diagram of a physical structure of an on-board network device according to an embodiment of the present application;
FIG. 11 is a schematic diagram of a physical structure of an AMF according to an embodiment of the present application;
FIG. 12 is a first structural diagram of an apparatus for managing NG interface connection according to an embodiment of the present application; and
FIG. 13 is a second structural diagram of an apparatus for managing NG interface connection according to an embodiment of the present application.

### DETAILED DESCRIPTION

In embodiments of the present application, the term "and/or" describes an association relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described below, in conjunction with the accompanying drawings. The described embodiments are only a part of the embodiments of the present application and not all of them. Based on the embodiments in the present application, all other embodiments obtained by those of ordinary skill in the art without creative labor fall within the scope of protection of the present application.

To clearly understand the various embodiments in the present application, relevant background knowledge is first introduced as follows. On-board network devices refer to network devices installed on satellites, and the on-board network devices may include one or more of on-board base stations, on-board feeding devices, on-board routing devices, and on-board switching devices. GNB on-board is taken as an example, however, the present application does not limit the scope of protection to the gNB on-board.

### A. 5G architecture supporting gNB on-board

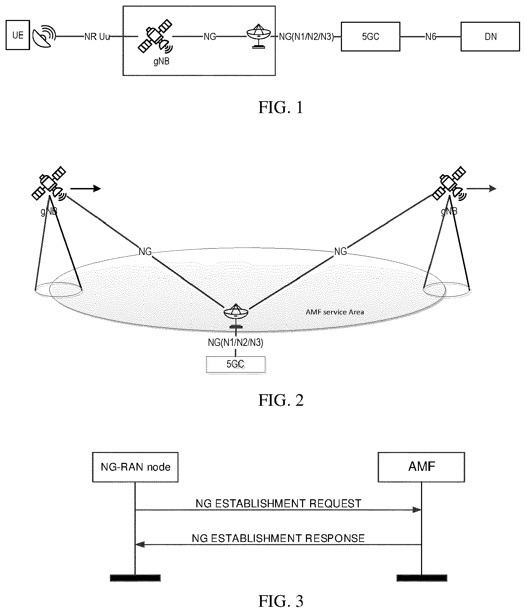

When a gNB deployed on a satellite is connected to a terrestrial 5G system, the gNB on-board needs to support N1/N2/N3 interfaces and these interfaces also need to be carried on the satellite radio interface, as shown in FIG. 1.

Due to the mobility of low orbit satellites, the gNB on-board will periodically enter and leave a service area of a terrestrial 5G core network, as shown in FIG. 2.

When the gNB on-board enters the service area for a terrestrial 5G core network, the gNB on-board will establish an association with a next generation (NG) interface of the 5G core network. Once leaving the service area of a currently connected access and mobility management function (AMF), the gNB on-board will lose the association with the NG interface established with the 5G core network.

The above example is illustrated by taking the 5G core network as an example, but the present application is not limited to the 5G core network.

### B. Establishment procedure of NG interface

The NG interface is a logical interface between a next generation radio access network (NG-RAN) and a 5G core network (5GC), used for transmitting a next generation application protocol (NGAP) signaling message. To carry the NGAP signaling message, it is required to establish a stream control transmission protocol (SCTP) association over the NG interface, that is, a transport network layer association (TNLA).

To establish an NG interface, per gNB on-board node/AMF pair should support at least one configuration for a SCTP association. When configurations for multiple SCTP associations are supported between per gNB on-board node/AMF pair, the AMF requests the gNB on-board to add/remove SCTP associations. The AMF may also specify the usage of the SCTP association, such as transmitting a specified type of NGAP signaling.

A schematic diagram of interaction between the NG-RAN and the AMF is shown in FIG. 3. After the SCTP connection is available, the gNB on-board may initiate an NG establishment request and establish an NG interface with the AMF. After the NG establishment process is completed, the gNB on-board may start to processing user signaling.

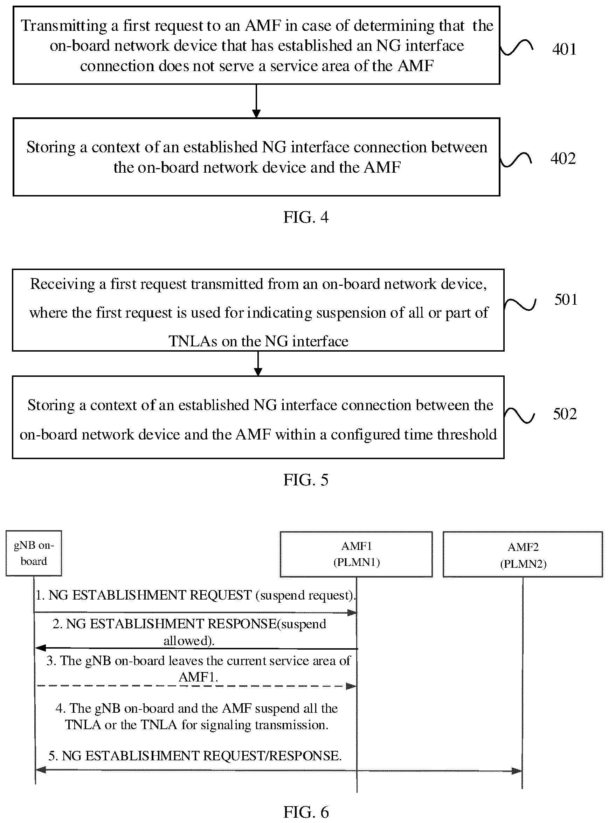

FIG. 4 is a first flow chart of a method for managing NG interface connection according to an embodiment of the present application. As shown in FIG. 4, an embodiment of the present application provides a method for managing next generation (NG) interface connection, performed by an on-board network device. The method includes the following steps.

Step 401: transmitting a first request to an access and mobility management function (AMF) in case of determining that the on-board network device that has established an NG interface connection does not serve a service area of the AMF.

Step 402: storing a context of an established NG interface connection between the on-board network device and the AMF.

The first request is used for indicating suspension of all or part of transport network layer associations (TNLAs) on the NG interface.

The on-board network device refers to a network device installed on satellites, and may include one or more of an on-board base station, an on-board feeding device, an on-board routing device, or an on-board switching device. The on-board network device determines the AMF that requires to establish an NG interface connection based on a coverage area determined by a beam of the on-board network device, and there may be multiple AMFs requiring to establish an NG interface connection. The service area determined by the beam of the on-board network device overlaps with the service area of the AMF with the established NG interface connection, and there may be multiple overlapping areas.

Since the on-board network device is based on the mobility of the satellite in which the on-board network device is deployed, the relative position of the on-board network device to the ground also changes. Therefore, the coverage area corresponding to the beam of the on-board network device will also change accordingly. If the on-board network device that has established the NG interface connection does not serve the service area, that is, if the coverage area corresponding to the beam of the on-board network device and the service area of the AMF with the established NG interface connection do not overlap, after the on-board network device needs to hand over/migrate a served user to another on-board network device capable of providing services, by transmitting the first request to the AMF, the AMF with the established NG interface connection may be indicated to suspend all or part of the TNLAs on the NG interface, and the context of the corresponding NG interface connection is stored.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the suspension of all or part of the TNLAs on the NG interface is determined by indication information carried in the first request, or is determined in case that the NG interface connection between the on-board network device and the AMF is established.

The on-board network device may carry the indication information in the first request to indicate the specific suspended all or part of the TNLAs on the NG interface; the indication information may not be carried in the first request, but suspended all or part of the TNLAs on the NG interface may be determined when the on-board network device sets up an NG interface connection with the AMF. The AMF with the established NG interface connection is notified through the first request to suspend the all or part of the previously determined TNLAs of NG interface.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, before transmitting the first request to the AMF in case of determining that the on-board network device that has established the NG interface connection does not serve the service area of the AMF, the method further includes:
transmitting an NG interface establishment request to an AMF within a service area of the on-board network device, where the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface in case that the on-board network device no longer serves the service area of the AMF; and
the response message of the NG interface establishment request is used for indicating whether the AMF allows to suspend all or part of the TNLAs on the NG interface.

Before all or part of the TNLAs between the AMF with established NG interface connection are suspended, the NG interface connection may be established between the on-board network device and the AMF, when it is determined that the on-board network device no longer servers the service area of the AMF, all or part of the TNLAs on the NG interface are suspended.

After the on-board network device starts, the to-be-served PLMN is determined based on the coverage area determined by each beam of the on-board network device, and then the AMF that requires to establish an NG interface connection is determined based on information of the PLMN. There may be multiple AMFs that require to establish an NG interface connection. The service area determined by the on-board network device based on the beam overlaps with the service area of the AMF with the established NG interface connection, and there may be multiple overlapping areas.

The on-board network device transmits the NG interface establishment request to the corresponding AMF, i.e., the AMF with overlapping service areas, where the first indication information is carried in the NG interface establishment request. The first indication information is used for notifying the AMF to suspend all or part of the TNLAs with established NG interface between the AMF and the on-board network device when the on-board network device no longer serves the service area of the AMF.

In addition, there is another situation where as the on-board network device moves, it may not serve a service area of an AMF A and may serve a service area of another AMF B. If no NG interface connection is established with the AMF B ago or AMF B has not stored the context of the NG interface connection related to the on-board network device locally, the on-board network device may also transmit the NG interface establishment request and carry the first indication information in the NG interface establishment request, to establish NG interface connection with the AMF B. When it is determined that the on-board network device no longer serves the service area of the AMF B, all or part of the TNLAs on the NG interface is suspended.

The first indication information may be one or more bits. For example, if the first indication information is one bit and may be set to 0 or 1. When it is 0, it means all TNLAs are suspended; and when it is 1, it means TNLAs for interface signaling (non-UE signaling) are suspended. The corresponding TNLA may be set to invalid to avoid using it for NGAP signaling transmission.

Subsequently, after receiving the NG interface establishment request, the corresponding AMF may determine whether it supports the relevant parameter in the NG interface establishment request based on its own load and other factors, or the TNLA related access priority and a quality of experience (QoE) requirement carried in the NG interface establishment request. After that, the AMF determines whether it supports suspending all TNLA or part of the TNLAs on the NG interface between the on-board network device and the AMF when the on-board network device no longer serves the service area of the AMF, and transmits the response message of the NG interface establishment request to the on-board network device.

If the AMF itself has a heavy load, the AMF then transmits the response message of the NG interface establishment request that it does not support suspension of all TNLA or part of the TNLAs on the NG interface between the on-board network device and the AMF when the on-board network device no longer serves the service area of the AMF. Otherwise, the AMF transmits a response message of supporting the suspension.

If AMF itself cannot meet the TNLA related access priority or the QoE requirement carried in the NG interface establishment request, the AMF then transmits the response message of the NG interface establishment request that it does not support suspension of all TNLAs or part of the TNLAs on the NG interface between the on-board network device and the AMF when the on-board network device no longer serves the service area of the AMF. Otherwise, the AMF transmits a response message of supporting the suspension.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the all TNLAs include a TNLA for user data transmission and a TNLA for interface signaling transmission, and the part of the TNLAs is a TNLA for interface signaling transmission.

After an NG interface connection between the on-board network device and the AMF is established, an SCTP association carrying NGAP signaling messages and a TNLA association are also established. That is, per on-board network device node/AMF pair should support at least one configuration for the SCTP association and the TNLA association. The SCTP is located at a transport layer, and the TNLA is located at a network layer.

The TNLAs may be used for user data transmission and interface signaling transmission, and all TNLAs include a TNLA for user data transmission and a TNLA for interface signaling transmission; thus, suspending all TNLAs means that TNLAs on the NG interface between the on-board network device and the AMF is no longer used for transmitting user data and interface signaling. The part of the TNLAs is a TNLA for interface signaling transmission; and suspending part of TNLA means that the TNLA on the NG interface between the on-board network device and the AMF is no longer used for transmitting interface signaling and may be used for transmitting user data.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, determining that the on-board network device that has established the NG interface connection does not serve the service area of the AMF includes one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, where the instruction indicates that the on-board network device no longer serves the AMF.

The on-board network device determines whether to serve the service area of AMF with established NG interface connection, which may include any or a combination of the following modes:
1: determining the corresponding terrestrial coverage area based on the beam of the on-board network device, and if there is no overlap between the service area of the AMF and the terrestrial coverage area, it means that the on-board network device no longer serves the AMF;
2: determining the specific location of the on-board network device based on the motion trajectory of the asynchronous satellite where it is deployed. When the on-board network device is deployed in a designated orbit position, it is considered that the on-board network device may serve the service area of the AMF (in this case, the beam coverage area may be adjusted by scheduling the beam pointing of the on-board network device);
3: receiving an instruction from a satellite operation control system or a network management system, where the instruction indicates the on-board network device to no longer serve the AMF.

Correspondingly, the on-board network device needs to store the context of the established NG interface connection and establishes NG interface connection with new AMF that may be served.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the method further includes:
transmitting a second request to the AMF in case that the on-board network device is capable of re-serving the service area of the AMF,
where the second request is used for resuming all or part of previously suspended TNLAs.

The on-board network device moves along with the movement of the satellite and the movement is periodic. The AMF that has previously established NG interface connection with the on-board network device may re-enter the service area of the on-board network device. The on-board network device transmits the second request to the AMF to resume all or part of the previously suspended TNLA.

For example, previously, the on-board network device and the AMF determine through the first request to suspend all TNLAs on the NG interface between the on-board network device and the AMF. After the first request is transmitted, both the on-board network device and the AMF store the context of the corresponding NG interface connection. When the on-board network device may serve the AMF again, the on-board network device transmits a second request and resumes all previously suspended TNLAs based on the context of the NG interface connection stored on both sides.

Similarly, if the on-board network device and the AMF determine through the first request to suspend part of the TNLAs on the NG interface between the on-board network device and the AMF. After the first request is transmitted, both the on-board network device and the AMF store the context of the corresponding NG interface connection. When the on-board network device may serve the AMF again, the on-board network device transmits a second request and resumes part of the previously suspended TNLA based on the context of the NG interface connection stored on both sides.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the second request at least includes: a message type, a global radio access network node identifier, or an AMF identifier.

When the on-board network device moves to an area in which the on-board network device may serve the service area of the AMF that has previously established an NG interface, the on-board network device transmits the second request to resume the previously established NG interface. The second request may be an NG resume request, which includes at least a message type, a global radio access network node identifier, and an AMF identifier.

The message type indicates that the message is a second request, such as the NG resume request.

The global radio access network node identifier is used for identifying a specific on-board network device.

The AMF identifier is used for identifying the AMF, and each AMF device has a unique AMF identifier.

In an embodiment, the second request may further include information such as a global radio access network node name, as shown in the table below.

| IE/Group Name | Presence | Description |
|---|---|---|
| Message Type | M | |
| Global RAN Node ID | M | |
| RAN Node Name | O | |
| AMF Name | M | |

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the suspension of all or part of the TNLAs is stopping transmitting interface signaling and/or user data through the TNLAs within a specified period, where the specified period is determined based on ephemeris information of the satellite where the on-board network device is deployed.

The on-board network device suspends all or part of the TNLAs means that the on-board network device does not transmit user data and/or interface signaling for a certain period through the TNLAs, then the TNLAs on the NG interface between the on-board network device and the AMF may still exist, but not used for a certain period, or the TNLAs on the NG interface between the on-board network device and the AMF may not exist. When a certain period expires, the corresponding TNLAs are resumed based on the locally-stored context of the NG interface connection. The certain period is determined based on the ephemeris information of the satellite where the on-board network device is deployed, which may be understood as the on-board network device returning to the position where the NG interface connection is established with the AMF after orbiting the Earth for one cycle.

If all TNLAs are suspended, the TNLAs will not be used for transmitting user data and interface signaling for a certain period.

If part of the TNLAs are suspended, the TNLAs will not be used for transmission interface signaling for a certain period.

The certain period is determined based on the ephemeris information of the satellite where the on-board network device is deployed. The satellite ephemeris, also known as two-line orbital element (TLE), is an expression used to describe a position and a velocity of a flying object. The satellite ephemeris may accurately calculate, predict, depict, and track the time, position, velocity, and other operational states of satellites and flying objects; the satellite ephemeris may express precise parameters of flying objects such as celestial bodies, satellites, spacecrafts, missiles, and space debris; the satellite ephemeris is able to place flying objects in three-dimensional space; the satellite ephemeris uses time to depict the past, present, and future of celestial bodies in a three-dimensional manner.

Based on the ephemeris information of the satellite where the on-board network device is deployed, the period during which the on-board network device suspends all or part of the TNLAs is usually determined by the time the satellite carrying the on-board network device orbits the Earth for one cycle, such as a time greater than or equal to one cycle.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, a survival period of the all or part of the TNLAs is controlled by a timer configured by the all or part of the TNLAs, and a period of the timer is slightly longer than the specified period.

All or part of the TNLAs are provided with a timer that controls the survival period of the TNLAs. If the timer expires, a heartbeat timeout mechanism of the SCTP protocol will be triggered, the SCTP will be shut down, and the corresponding TNLAs will also be shut down. Therefore, the timer period for the above TNLAs is set to be slightly longer than the period for suspending the TNLAs, to avoid that the connection of the TNLAs has been shut down or released in case that the period time of the suspension is not reached, so the TNLAs cannot be resumed through the second request. Instead, the NG interface between the on-board network device and the AMF, as well as the TNLAs over the NG interface must be re-establish through the NG interface establishment request.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

FIG. 5 is a second flow chart of a method for managing NG interface connection according to an embodiment of the present application. As shown in FIG. 5, an embodiment of the present application provides a method for managing next generation (NG) interface connection, performed by an access and mobility management function (AMF). The method includes the following steps.

Step 501: receiving a first request transmitted from an on-board network device, where the first request is used for indicating suspension of all or part of transport network layer associations (TNLAs) on the NG interface.

Step 502: storing a context of an established NG interface connection between the on-board network device and the AMF within a configured time threshold.

The AMF corresponds to an AMF. In case that a service area determined by the on-board network device based on a beam overlaps with a service area of a terrestrial AMF, and an NG interface connection is established, the on-board network device no longer serves the service area of the AMF, i.e., there is no overlap between the coverage area corresponding to the beam of the on-board network device and the service area of the AMF with established NG interface connection, the on-board network device needs to hand over/migrate the served users to other on-board network devices that may provide services. After that, the on-board network device may transmit the first request to the AMF, and the first request is used for indicating the suspension of all or part of the TNLAs on the NG interface.

After receiving the first request by the AMF, both the on-board network device and the AMF store the context of the established NG interface connection between the on-board network device and the AMF. AMF may store the context of the NG interface connection locally or in entities with storage capabilities connected to the AMF, such as a data storage function (DSF).

In addition, the AMF stores the context of NG interface connection within the configured time threshold. If the configured time threshold is exceeded, the context of the stored NG interface connection is released to improve the utilization of storage space. The configured time threshold is for an on-board network device node/AMF pair. The AMF releases the context of the stored NG interface connection also means that the context of the NG interface connection between the on-board network device and the AMF is released.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the suspension of all or part of the TNLAs on the NG interface is determined by indication information carried in the first request, or is determined in case that the NG interface connection between the on-board network device and the AMF is established.

The first request received by the AMF may carry the indication information, and the indication information is used for indicating the specific suspension of all or part of the TNLAs on the NG interface. The indication information may not be carried in the first request, but suspended all or part of the TNLAs on the NG interface may be determined when the on-board network device sets up an NG interface connection with the AMF. The AMF with the established NG interface connection is notified through the first request to suspend all or part of the previously determined TNLAs on the NG interface.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, before receiving the first request transmitted from the on-board network device, the method further includes:
receiving an NG interface establishment request transmitted from the on-board network device, where the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

Before all or part of the TNLAs between the AMF with established NG interface connection are suspended, the NG interface connection may be established between the on-board network device and the AMF, when it is determined that the on-board network device no longer servers the service area of the AMF, all or part of the TNLAs on the NG interface are suspended.

After the on-board network device starts, the to-be-served PLMN is determined based on the coverage area determined by each beam of the on-board network device, and then the AMF that needs to establish an NG interface connection is determined based on information of the PLMN. There may be multiple AMFs that need to establish an NG interface connection. There may be multiple AMFs that receive the NG interface establishment request transmitted from the same on-board network device. The service area determined by the on-board network device based on the beam overlaps with the service area of the AMF with established NG interface connection, and there may be multiple overlapping areas.

The AMF receives the NG interface establishment request transmitted from the on-board network device, and the NG interface establishment request carries the first indication information, and the first indication information is used for notifying the AMF to suspend all or part of the TNLAs of the established NG interface between the AMF and the on-board network device when the on-board network device no longer serves the service area of the AMF.

The first indication information may be one or more bits. For example, if the first indication information is one bit and may be set to 0 or 1. When it is 0, it means all TNLAs are suspended; and when it is 1, it means TNLAs for interface signaling (non-UE signaling) are suspended. The corresponding TNLA may be set to invalid to avoid using it for NGAP signaling transmission.

Subsequently, after receiving the NG interface establishment request, the corresponding AMF transmits the response message of the NG interface establishment request to the on-board network device to determine whether is supports to suspend all or part of TNLAs on the NG interface between the on-board network device and the AMF when the on-board network device no longer serves the service area of the AMF.

The AMF may determine whether it supports the relevant parameter in the NG interface establishment request based on its own load and other factors, as well as the TNLA related access priority and a quality of experience (QoE) requirement carried in the NG interface establishment request. After that, the AMF determines whether to suspend all or part of the TNLAs on the NG interface between the on-board network device and the AMF.

If the AMF itself has a heavy load, the AMF then transmits the response message of the NG interface establishment request that it does not support suspension of all TNLA or part of the TNLAs on the NG interface between the on-board network device and the AMF when the on-board network device no longer serves the service area of the AMF. Otherwise, the AMF transmits a response message of supporting the suspension.

If AMF itself cannot meet the TNLA related access priority or the QoE requirement carried in the NG interface establishment request, the AMF then transmits the response message of the NG interface establishment request that it does not support suspension of all TNLAs or part of the TNLAs on the NG interface between the on-board network device and the AMF when the on-board network device no longer serves the service area of the AMF. Otherwise, the AMF transmits a response message of supporting the suspension.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the all TNLAs include a TNLA for user data transmission and a TNLA for interface signaling transmission, and the part of the TNLAs is a TNLA for interface signaling transmission.

After an NG interface connection between the on-board network device and the AMF is established, an SCTP association carrying NGAP signaling messages and a TNLA association are also established. That is, per on-board network device node/AMF pair should support at least one configuration for the SCTP association and the TNLA association. The SCTP is located at a transport layer, and the TNLA is located at a network layer.

The TNLAs may be used for user data transmission and interface signaling transmission, and all TNLAs include a TNLA for user data transmission and a TNLA for interface signaling transmission; thus, suspending all TNLAs means that TNLAs on the NG interface between the on-board network device and the AMF is no longer used for transmitting user data and interface signaling. The part of the TNLAs is a TNLA for interface signaling transmission; and suspending part of TNLA means that the TNLA on the NG interface between the on-board network device and the AMF is no longer used for transmitting interface signaling and may be used for transmitting user data.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the configured time threshold is determined based on ephemeris information of the satellite where the on-board network device is deployed, to indicate when the on-board network device is capable of re-serving the service area of the AMF.

The on-board network device moves along with the movement of the satellite. When there is no overlapping area between the service area determined by the beam of the on-board network device and the service area of the AMF established with the NG interface connection, the first request is transmitted to the AMF. After receiving the first request, the AMF transmits the corresponding response message. The on-board network device and the AMF immediately suspend all or part of the TNLAs on the NG interface, and both the on-board network device and the AMF have stored the corresponding context of the NG interface connection.

There is a time limit for the AMF to store the context of the NG interface connection, and the specific time limit is determined based on the ephemeris information of the satellite where the on-board network device is deployed, i.e., a time during which the on-board network device is capable of re-serving the service area of the AMF. That is, the time during which the on-board network device may once re-serve the service area of the AMF after orbiting the Earth for one cycle.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the method further includes:
receiving a second request transmitted from the on-board network device; and
transmitting a second response message to the on-board network device, where the second response message is used for indicating whether the all or part of the TNLAs are resumed,
where the second request is used for resuming all or part of previously suspended TNLAs.

The on-board network device follows the movement of the satellite where it is deployed, and the movement is periodic. AMFs that have previously established NG interface connection with the on-board network device may re-enter the service area of the on-board network device. If so, the on-board network device transmits the second request to the AMF to resume all or part of the previously suspended TNLA.

For example, previously, the on-board network device and the AMF determine through the first request to suspend all TNLAs on the NG interface between the on-board network device and the AMF. After the first request is transmitted, both the on-board network device and the AMF store the context of the corresponding NG interface connection. When the on-board network device may serve the AMF again, the on-board network device transmits a second request and resumes all previously suspended TNLAs.

Similarly, if the on-board network device and the AMF determine through the first request to suspend part of the TNLAs on the NG interface between the on-board network device and the AMF. After the first request is transmitted, both the on-board network device and the AMF store the context of the corresponding NG interface connection. When the on-board network device may serve the AMF again, the on-board network device transmits a second request and resumes part of the previously suspended TNLA.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, the method further includes:
in case of determining that the part of the TNLAs suspended between the on-board network device and the AMF are resumed,
transmitting a first next generation application protocol (NGAP) message to the on-board network device, where the first NGAP message is used for adding the TNLAs; or
transmitting a second NGAP message to the on-board network device, where the second NGAP message is used for notifying the on-board network device to update a configuration parameter of the NG interface.

If all TNLAs on the NG interface between the on-board network device and the AMF are resumed, then the TNLAs on the NG interface between the on-board network device and the AMF may be used for transmitting interface signaling and user data.

If the AMF determines the need to add a new TNLA, the AMF will transmit the NGAP message to add a new TNLA. Subsequently, interface signaling and user data interaction may also be carried out between the AMF and the on-board network device.

The AMF may also transmit, if it is found that information of the context needs to be updated, the NGAP message to notify the on-board network device to update the configuration of the NG interface based on the stored context of the NG interface connection, such as updating the served global unique AMF identifier (GUAMI) or the backed-up AMF.

In the method for managing NG interface connection provided the embodiments of the present application, in case that a data plane and a user plane of the on-board network device are both located on the satellite, the TNLAs of the NF interface are flexibly suspended or resumed through NG interface signaling interaction, which reduces the signaling overhead of the NG interface, accelerates the establishment of NG interface signaling connection, and conveniently manages NG interface connection.

In an embodiment, the method further includes:
in case of determining that the part of the TNLAs suspended between the on-board network device and the AMF are resumed,
transmitting a third NGAP message to the on-board network device, where the third NGAP message is used for creating a user signaling TNLA corresponding to the part of the TNLAs, and the third NGAP message is transmitted through the resumed part of the TNLAs.

The part of the TNLAs on the NG interface between the on-board network device and the AMF is resumed, which means that the TNLAs on the NG interface between the on-board network device and the AMF may be used for transmitting interface signaling.

The AMF may the transmit NGAP message through the resumed TNLA for interface signaling transmission, and create a new TNLA for transmitting user data corresponding to the TNLA for interface signaling transmission. Subsequently, the AMF may also interact with the on-board network device for user data.

In the method for managing NG interface connection provided the embodiments of the present application, in case that a data plane and a user plane of the on-board network device are both located on the satellite, the TNLAs of the NF interface are flexibly suspended or resumed through NG interface signaling interaction, which reduces the signaling overhead of the NG interface, accelerates the establishment of NG interface signaling connection, and conveniently manages NG interface connection.

In an embodiment, the suspension of all or part of the TNLAs is stopping transmitting interface signaling and/or user data through the TNLAs within a specified period, wherein the specified period is determined based on ephemeris information of the satellite where the on-board network device is deployed.

The on-board network device suspends all or part of the TNLAs means that the on-board network device does not transmit user data and/or interface signaling for a certain period through the TNLAs, then the TNLAs on the NG interface between the on-board network device and the AMF may still exist, but not used for a certain period, or the TNLAs on the NG interface between the on-board network device and the AMF may not exist. When a certain period expires, the corresponding TNLAs are resumed based on the locally-stored context of the NG interface connection. The certain period is determined based on the ephemeris information of the satellite where the on-board network device is deployed, which may be understood as the on-board network device returning to the position where the NG interface connection is established with the AMF after orbiting the Earth for one cycle.

If all TNLAs are suspended, the TNLAs will not be used for transmitting user data and interface signaling for a certain period.

If part of the TNLAs are suspended, the TNLAs will not be used for transmission interface signaling for a certain period.

The certain period is determined based on the ephemeris information of the satellite where the on-board network device is deployed.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

In an embodiment, a survival period of the all or part of the TNLAs is controlled by a timer configured by the all or part of the TNLAs, and a period of the timer is slightly longer than the specified period.

All or part of the TNLAs are provided with a timer that controls the survival period of the TNLAs. If the timer expires, a heartbeat timeout mechanism of the SCTP protocol will be triggered, the SCTP will be shut down, and the corresponding TNLA will also be shut down. Therefore, the timer period for the above TNLAs is set to be slightly longer than the period for suspending the TNLA, to avoid the connection of the TNLA has been shut down in case that the period time of the suspension is not reached, so the TNLA cannot be resumed through the second request. Instead, the NG interface between the on-board network device and the AMF, as well as the TNLA over the NG interface is re-established through the NG interface establishment request.

In the method for managing NG interface connection provided by the embodiments of the present application, in case that a data plane and a user plane of the on-board network device are both located on the satellite, the context of the NG interface connection stored locally when the suspension of all or part of the TNLAs on the NG interface is determined based on a service area position of the on-board network device, which reduces the signaling overhead of the NG interface, accelerates the establishment of NG interface signaling connection, and conveniently manages NG interface connection.

The following are embodiments illustrating the method for managing NG interface connection provided in the present application. On-board network device refers to network device installed on satellites, and the on-board network device may include one or more of on-board base stations, on-board feeding devices, on-board routing devices, and on-board switching devices. The following mainly takes on-board base station (gNB) for an example for explanation, but it does not limit the on-board network device disclosed in the present application.

FIG. 6 is a first implementation diagram of a method for managing NG interface connection according to an embodiment of the present application. As shown in FIG. 6, the specific steps to establish a next generation (NG) interface between an gNB on-board and an access and mobility management function (AMF) are as follows.
1: After the gNB on-board starts, and determines with which AMFs to establish NG interfaces based on the corresponding service area of its beam. The public land mobile network (PLMN) that needs to be served is determined based on the service area of the gNB on-board, and the AMF that requires to establish an NG interface is determined based on PLMN information (there may be multiple AMFs). The gNB on-board initiates an NG establishment request carrying an instruction in the request to notify the AMF to suspend all or part of transport network layer associations (TNLAs) of the gNB on-board when the gNB on-board leaves the service area of the AMF. For example, the instruction may be set to 0 and 1, where 0 indicates suspending all TNLAs and 1 indicates suspending TNLAs for interface signaling transmission; suspending all or part of the TNLAs refers to invalidating TNLA to avoid using it for NGAP signaling transmission, and extending the heartbeat interval on TNLA to a specified period (which may be calculated based on ephemeris information), such as 2 or 4 hours, to prevent a stream control transmission protocol (SCTP) from shutting down SCTP connection (i.e. TNLA) due to the heartbeat timeout mechanism of the SCTP.
2: When the AMF responds to the NG establishment procedure, the AMF may confirm with the gNB on-board whether the AMF supports suspending all or part of the TNLAs of the gNB on-board after the gNB on-board leaves (using the TNLA for interface signaling transmission).
3: When the gNB on-board is about to leave the current service area of AMF1, after handing over/migrating the served users to other gNBs, the gNB on-board may transmit a leaving notification to the AMF1. The AMF1 will determine whether to allow it based on its own capability or load. If it is allowed, the AMF1 will promptly suspend the TNLAs of the gNB on-board. The gNB on-board may determine the leaving of the service area of the AMF based on the following criteria.
3.1: The gNB on-board determines the leaving of the service area of the AMF based on a beam coverage area (such as the beam coverage area no longer overlapping with the configured current AMF service range or current PLMN range).
3.2: The gNB on-board determines that it will no longer serve the service area of the current AMF based on the preset constellation position. When the on-board network device is deployed in a designated orbit position, it is considered that the on-board network device may serve the service area of the AMF (in this case, the beam coverage area may be adjusted by scheduling the beam pointing of the on-board network device).
3.3: The gNB on-board receives an instruction from a satellite operation control system or a network management system to determine that it will no longer serve the service area of the current AMF.
4: The gNB on-board and the AMF promptly suspend the TNLAs and stop signaling interaction over the NG interface. After TNLAs are suspended, a context of the NG interface connection is retained on both the gNB on-board and the AMF. The AMF may store the context locally, or may store the context to a data storage function (DSF). The AMF determines a next reconnection time of the gNB on-board based on the ephemeris information of the satellite where the gNB on-board is deployed, and on this basis, sets a survival cycle of the context and starts a timer. After the timer expires, the stored context is released. The specific content of the context of the NG interface connection is different on the gNB on-board side and the AMF side.

The context of the NG interface connection on the gNB on-board side may include the following.

| |
|---|
| Global RAN Node ID |
| RAN Node Name |
| AMF Name |

| **Served GUAMI List** |
|---|
| >Served GUAMI Item |
| >>GUAMI |
| >>Backup AMF Name |
| >>GUAMI Type |

| **PLMN Support List** |
|---|
| **>PLMN Support Item** |
| >>PLMN Identity |
| >>Slice Support List |
| >>Extended Slice Support List |

| **TNL Associations** |
|---|
| >gNB TNL Association Address |
| >AMF TNL Association Address |
| >TNL Association Usage |
| >TNL Address Weight Factor |

The context of the NG interface connection on the AMF side may include the following.

| |
|---|
| Global RAN Node ID |
| RAN Node Name |
| AMF Name |

| **Served GUAMI List** |
|---|
| >Served GUAMI Item |
| >>GUAMI |
| >>Backup AMF Name |
| >>GUAMI Type |

| **PLMN Support List** |
|---|
| **>PLMN Support Item** |
| >>PLMN Identity |
| >>Slice Support List |
| >>Extended Slice Support List |

| **Supported TA List** |
|---|
| **Supported TA Item** |
| >>TAC |

| **>>Broadcast PLMN List** |
|---|
| **>>>Broadcast PLMN Item** |
| >>>>PLMN Identity |
| >>>>TAI Slice Support List |
| >>>>NPN Support |
| >>>>Extended TAI Slice Support List |
| >>Configured TAC Indication |
| >>RAT Information |
| Default Paging DRX |

| **TNL Associations** |
|---|
| >gNB TNL Association Address |
| >AMF TNL Association Address |
| >TNL Association Usage |
| >TNL Address Weight Factor |

5: After the gNB on-board enters a new service area of AMF2, the gNB on-board initiates the NG establishment procedure to the AMF2. The gNB on-board may determine entering the service range of the new AMF based on the following criteria.
5.1: The gNB on-board determines entering the service area of the new AMF based on the beam coverage area (such as the beam coverage entering a configured AMF service range or a PLMN range);
5.2: The gNB on-board determines the service area of a certain AMF that needs to be served based on the preset constellation position. When the gNB on-board is deployed in the designated orbit position, it is considered that the gNB on-board may serve the service area of the AMF (in this case, the beam coverage area may be adjusted by scheduling the beam pointing of the gNB on-board);
5.3: The gNB on-board receives an instruction from the satellite operation control system or the network management system to determine the service area that needs to serve a certain AMF.

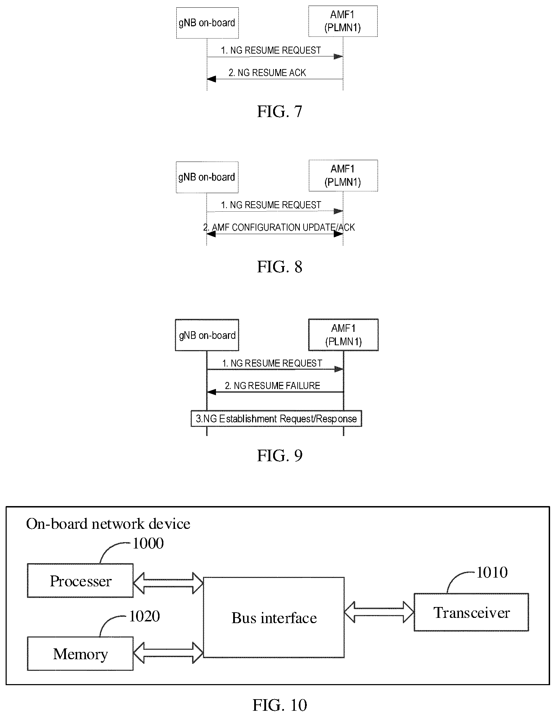

FIG. 7 is a second implementation schematic diagram of a method for managing NG interface connection provided in embodiments of the present application. As shown in FIG. 7, the specific steps for resuming all or part of transport network layer associations (TNLAs) of a next generation (NG) interface between a gNB on-board and an access and mobility management function (AMF) include the following.
1: Due to the movement of the gNB on-board, the gNB on-board may re-enter a service range of AMF1. If there is a suspended TNLA between the gNB on-board and the AMF1, the gNB on-board may initiate a procedure of resuming an NG interface association, such as transmitting an NG resume request.

| IE/Group Name | Presence | Description |
|---|---|---|
| Message Type | M | |
| Global RAN Node ID | M | |
| RAN Node Name | O | |
| AMF Name | M | |

2: The AMF resumes all or part of the TNLAs based on the context of NG interface connection stored in RAN node ID and an AMF name index. The AMF feedbacks an acknowledgement message, which may carry relative AMF capacity. User signaling interaction may be carried out between the gNB on-board and the AMF consequently.

FIG. 8 is a third implementation schematic diagram of a method for managing NG interface connection provided in embodiments of the present application. As shown in FIG. 8, when an gNB on-board and an access and mobility management function (AMF) resume transport network layer associations (TNLAs) of a next generation (NG) interface, a new TNLA is added, or a context of the NG interface connection is updated. The specific steps are as follows.
1: When an association between the gNB on-board and AMF1 is established, if there are all or part of suspended TNLAs between the gNB on-board and the AMF1, the gNB on-board may initiate the resume request to resume the NG interface association.
2: The AMF resumes all or part of the suspended TNLAs. If it is determined that a new TNLA needs to be added, a next generation application protocol (NGAP) message (such as AMF CONFIGURATION UPDATE) will be transmitted through the TNLA for transmitting interface signaling in all or part of the resumed TNLAs. User signaling interaction may be carried out between the gNB on-board and the AMF consequently.
3: Based on a context of the stored NG interface connection, if the AMF finds that information in the context of the NG interface connection needs to be updated, the AMF may also notify the gNB on-board to update a configuration of the NG interface by transmitting an NGAP message (such as AMF CONFIGURATION UPDATE) through the TNLA for transmitting interface signaling in all or part of the resumed TNLAs, such as updating served GUAMI or backup AMF.

FIG. 9 is a fourth implementation schematic diagram of a method for managing NG interface connection provided in embodiments of the present application. As shown in FIG. 9, an gNB on-board and an access and mobility management function (AMF) fail to resume transport network layer associations (TNLAs) of a next generation (NG) interface. The specific steps are as follows.
1: Due to the movement of the gNB on-board, the gNB on-board may re-enter a service area of AMF1. If there is suspended TNLA between the gNB on-board and AMF1, the gNB on-board may initiate a resume request to resume an NG interface association.
2: If the AMF fails to find a context of the NG interface connection, the NG resume procedure fails, and the AMF reports that resuming all or part of the TNLAs fails.
3: After receiving a failure response from the AMF, the gNB on-board initiates a normal NG establishment procedure to re-establish the NG interface association.

FIG. 10 is a schematic diagram of a physical structure of an on-board network device according to an embodiment of the present application. As shown in FIG. 10, the on-board network device includes a memory 1020, a transceiver 1010, and a processor 1000, where the processor 1000 and the memory 1020 may also be physically arranged separately.

The memory 1020 is used for storing a computer program; the transceiver 1010 is used for transmitting and receiving data under control of the processor 1000.

The transceiver 1010 is used for receiving and transmitting data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits. These are well known in the art and therefore will not be described further in the present application. The bus interface provides an interface. The transceiver 1010 may be multiple elements, i.e., includes a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic device (CPLD), and the processor may also use a multi-core architecture.

The processor 1000 obtains executable instructions by calling the computer program stored in the memory 1020 to perform operations of the method performed by an on-board network device according to an embodiment of the present application including:
transmitting a first request to an access and mobility management function (AMF) in case of determining that the on-board network device that has established an NG interface connection does not serve a service area of the AMF; and
storing a context of the established NG interface connection between the on-board network device and the AMF,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before transmitting the first request to the AMF in case of determining that the on-board network device that has established the NG interface connection does not serve the service area of the AMF, the operations further include:
transmitting an NG interface establishment request to an AMF within a service area of the on-board network device, where the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, determining that the on-board network device that has established the NG interface connection does not serve the service area of the AMF includes one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, where the instruction indicates that the on-board network device no longer serves the AMF.

In an embodiment, the operations further include:
transmitting a second request to the AMF in case that the on-board network device is capable of re-serving the service area of the AMF,
where the second request is used for resuming all or part of previously suspended TNLAs.

In an embodiment, the second request at least includes: a message type, a global radio access network node identifier, or an AMF identifier.

In an embodiment, the suspension of all or part of the TNLAs is stopping transmitting interface signaling and/or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

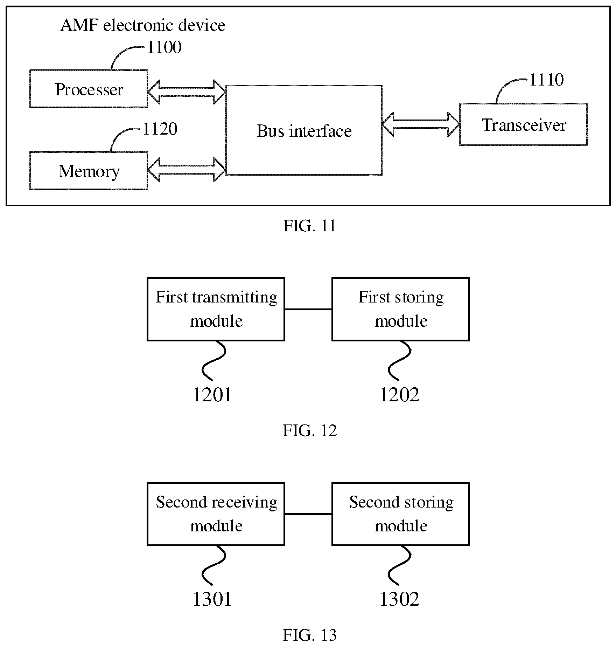

FIG. 11 is a schematic diagram of a physical structure of an AMF device according to an embodiment of the present application. As shown in FIG. 11, the network side device includes a memory 1120, a transceiver 1110, and a processor 1100, where the processor 1100 and the memory 1120 may also be physically arranged separately.

The memory 1120 is used for storing a computer program; the transceiver 1110 is used for transmitting and receiving data under control of the processor 1100.

The transceiver 1110 is used for receiving and transmitting data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits. These are well known in the art and therefore will not be described further in the present application. The bus interface provides an interface. The transceiver 1110 may be multiple elements, i.e., includes a transmitter and a receiver, units for providing communication with various other devices over transmission media including wireless channels, wired channels, fiber optic cables, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field-programmable gate array (FPGA), or a complex programmable logic device (CPLD), and the processor may also use a multi-core architecture.

The processor 1100 obtains executable instructions by calling the computer program stored in the memory 1120 to performs operations of the method AMF performed by an access and mobility management function (AMF), including:
receiving a first request transmitted from an on-board network device; and
storing a context of an established NG interface connection between the on-board network device and the AMF within a configured time threshold,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before receiving the first request transmitted from the on-board network device, the operations further include:
receiving an NG interface establishment request transmitted from the on-board network device, where the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

In an embodiment, the all TNLAs include a TNLA for user data transmission and a TNLA for interface signaling transmission, and the part of the TNLAs is a TNLA for interface signaling transmission.

In an embodiment, the configured time threshold is determined based on ephemeris information of the satellite where the on-board network device is deployed, to indicate when the on-board network device is capable of re-serving the service area of the AMF.

In an embodiment, the operations further include:
receiving a second request transmitted from the on-board network device; and
transmitting a second response message to the on-board network device, where the second response message is used for indicating whether the all or part of the TNLAs are resumed,
where the second request is used for resuming all or part of previously suspended TNLAs.

In an embodiment, the operations further include:
in case of determining that the all TNLAs suspended between the on-board network device and the AMF are resumed,
transmitting a first next generation application protocol (NGAP) message to the on-board network device, where the first NGAP message is used for adding the TNLAs; or
transmitting a second NGAP message to the on-board network device, where the second NGAP message is used for notifying the on-board network device to update a configuration parameter of the NG interface.

In an embodiment, the operations further include:
in case of determining that the part of the TNLAs suspended between the on-board network device and the AMF are resumed,
transmitting a third NGAP message to the on-board network device, where the third NGAP message is used for creating a user signaling TNLA corresponding to the part of the TNLAs, and the third NGAP message is transmitted through the resumed part of the TNLAs.

In an embodiment, the suspension of all or part of the TNLAs is stopping transmitting interface signaling or user data through the TNLAs within a specified period, where the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

It should be noted that the above-mentioned on-board network device and the AMF device according to an embodiment of the present application may achieve all the method steps implemented in the above method embodiments and achieve the same technical effects. Therefore, the same parts and beneficial effects as in the method embodiments in this embodiment will not be elaborated in detail.

FIG. 12 is a first structural diagram of an apparatus for managing NG interface connection according to an embodiment of the present application. As shown in FIG. 12, the apparatus includes:
a first transmitting module 1201, used for transmitting a first request to an access and mobility management function (AMF) in case of determining that the on-board network device that has established an NG interface connection does not serve a service area of the AMF; and
a first storing module 1202, used for storing a context of the established NG interface connection between the on-board network device and the AMF,
where the first request is used for indicating suspension of all or part of a transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, in the further description of the above apparatus, before determining that the on-board network device that has established the NG interface connection does not serve the service area of the AMF, the first transmitting module 1201 transmits the first request to the AMF, the first transmitting module 1201 is further used for:
transmitting an NG interface establishment request to an AMF within a service area of the on-board network device, where the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
where the first indication information is used for indicating the AMF to suspend all or part of the TNLAs on the NG interface in case that the on-board network device no longer serves the service area of the AMF.

In an embodiment, the all TNLAs include a TNLA for user data transmission and a TNLA for interface signaling transmission, and the part of the TNLAs is a TNLA for interface signaling transmission.

In an embodiment, determining that the on-board network device that has established the NG interface connection does not serve the service area of the AMF includes one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, where the instruction indicates that the on-board network device no longer serves the AMF.

In an embodiment, the first transmitting module 1201 is further used for:
transmitting a second request to the AMF in case that the on-board network device is capable of re-serving the service area of the AMF,
where the second request is used for resuming all or part of previously suspended TNLAs.

In an embodiment, the second request at least includes: a message type, a global radio access network node identifier, or an AMF identifier.

In an embodiment, the suspension of all or part of the TNLAs is stopping transmitting interface signaling and/or user data through the TNLAs within a specified period, where the specified period is determined based on ephemeris information of the satellite where the on-board network device is deployed.

In an embodiment, a survival period of the all or part of the TNLAs is controlled by a timer configured by the TNLA, where the period of the timer is slightly longer than the specified period.

FIG. 13 is a second structural diagram of an apparatus for managing NG interface connection according to an embodiment of the present application. As shown in FIG. 13, the apparatus includes:
a second receiving module 1301, used for receiving a first request transmitted from an on-board network device; and
a second storing module 1302, used for storing a context of an established NG interface connection between the on-board network device and the AMF within a configured time threshold,
where the first request is used for indicating suspension of all or part of transport network layer associations (TNLAs) on the NG interface.

In an embodiment, the suspension of all or part of the TNLAs on the NG interface is determined by indication information carried in the first request, or is determined in case that the NG interface connection between the on-board network device and the AMF is established.

In an embodiment, before receiving the first request transmitted from the on-board network device, the second receiving module 1302 is further used for receiving an NG interface establishment request transmitted from the on-board network device, where the NG interface establishment request carries first indication information.

The first indication information is used for indicating the AMF to suspend all or part of the TNLAs on the NG interface between the on-board network device and the AMF in case that the on-board network device no longer serves the service area of the AMF.

The apparatus further includes a second transmitting module 1303, used for transmitting a response message of the NG interface establishment request to the on-board network device; the response message of the NG interface establishment request is used for indicating whether the AMF allows to suspend all or part of the TNLAs on the NG interface;

The second receiving module 1302 is further used for determining, based on the response message of the NG interface establishment request, whether to suspend all or part of the TNLAs on the NG interface in case of determining that the on-board network device that has established the NG interface connection does not serve the service area of the AMF.

In an embodiment, the all TNLAs include a TNLA for user data transmission and a TNLA for interface signaling transmission, and the part of the TNLAs is a TNLA for interface signaling transmission.

In an embodiment, the configured time threshold is determined based on ephemeris information of the satellite where the on-board network device is deployed, to indicate when the on-board network device is capable of re-serving the service area of the AMF.

In an embodiment, the second receiving module 1302 is further used for receiving a second request transmitted from the on-board network device, where the second request is used for resuming all or part of previously suspended TNLAs.

The second transmitting module 1303 is used for transmitting a second response message to the on-board network device, where the second response message is used for indicating whether the all or part of the TNLAs are resumed.

In an embodiment, the second transmitting module 1303 is further used for:
in case of determining that the all TNLAs suspended between the on-board network device and the AMF are resumed,
transmitting a first next generation application protocol (NGAP) message to the on-board network device, where the first NGAP message is used for adding the TNLAs; or
transmitting a second NGAP message to the on-board network device, where the second NGAP message is used for notifying the on-board network device to update a configuration parameter of the NG interface.

In an embodiment, the second transmitting module 1303 is further used for:
in case of determining that the part of the TNLAs suspended between the on-board network device and the AMF are resumed,
transmitting a third NGAP message to the on-board network device, where the third NGAP message is used for creating a user signaling TNLA corresponding to the part of the TNLAs, and the third NGAP message is transmitted through the resumed part of the TNLAs.

In an embodiment, the suspension of all or part of the TNLAs is stopping transmitting interface signaling and/or user data through the TNLAs within a specified period, wherein the specified period is determined based on ephemeris information of the satellite where the on-board network device is deployed.

In an embodiment, a survival period of the all or part of the TNLAs is controlled by a timer configured by the all or part of the TNLAs, and a period of the timer is slightly longer than the specified period.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or optical disk.

It should be noted that the above-mentioned apparatuses according to an embodiment of the present application may achieve all the method steps implemented in the above method embodiments, and may achieve the same technical effect. The same parts and beneficial effects as in the method embodiments in this embodiment will not be elaborated in detail.

An embodiment of the present applications further provides a processor readable storage medium, where the processor readable storage medium stores a computer program for causing the processor to perform the method for managing NG interface connection provided in the aforementioned embodiments, including:
transmitting a first request to an access and mobility management function (AMF) in case of determining that the on-board network device that has established an NG interface connection does not serve a service area of the AMF; and
storing a context of the established NG interface connection between the on-board network device and the AMF,
where the first request is used for indicating suspension of all or part of transport network layer associations (TNLAs) on the NG interface.

An embodiment of the present applications further provides a processor readable storage medium, where the processor readable storage medium stores a computer program for causing the processor to perform the method for managing NG interface connection provided in the aforementioned embodiments, including:
receiving a first request transmitted from an on-board network device; and
storing a context of an established NG interface connection between the on-board network device and the AMF within a configured time threshold,
where the first request is used for indicating suspension of all or part of transport network layer associations (TNLAs) on the NG interface.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to an embodiment of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The network side device in the embodiments of the present application may be a base station, and the base station may include multiple cells providing services for the terminal. Depending on the specific application, the network side device may also be called an access point, or may be a device in the access network that communicates with radio terminal through one or more sectors over the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The terminal in the embodiments of the present application may be a device that provides voice and/or data connectivity to a user, a handheld device with a radio connection function, or other processing device connected to a radio modem. In different systems, the names of the terminal may be different. For example, in the 5G system, the terminal may be called as user equipment (UE). A radio terminal may communicate with one or more core networks (CN) via a radio access network (RAN), and the radio terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations

## Claims

1. A method for managing next generation, NG, interface connection, performed by an on-board network device, comprising:
transmitting a first request to an access and mobility management function, AMF, in case of determining that the on-board network device that has established an NG interface connection does not serve a service area of the AMF; and
storing a context of the established NG interface connection between the on-board network device and the AMF,
wherein the first request is used for indicating suspension of all or part of transport network layer associations, TNLAs, on the NG interface.

2. The method of claim 1, wherein the suspension of all or part of the TNLAs on the NG interface is determined by indication information carried in the first request, or is determined in case that the NG interface connection between the on-board network device and the AMF is established.

3. The method of claim 1, wherein before transmitting the first request to the AMF in case of determining that the on-board network device that has established the NG interface connection does not serve the service area of the AMF, the method further comprises:
transmitting an NG interface establishment request to an AMF within a service area of the on-board network device, wherein the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface when the on-board network device no longer serves the service area of the AMF; and
the response message of the NG interface establishment request is used for indicating whether the AMF allows to suspend all or part of the TNLAs on the NG interface.

4. The method of claim 1, wherein the all TNLAs comprise a TNLA for user data transmission and a TNLA for interface signaling transmission, and the part of the TNLAs is a TNLA for interface signaling transmission.

5. The method of claim 1, wherein determining that the on-board network device that has established the NG interface connection does not serve the service area of the AMF comprises one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, wherein the instruction indicates that the on-board network device no longer serves the AMF.

6. The method of claim 1, wherein the method further comprises:
transmitting a second request to the AMF in case that the on-board network device is capable of re-serving the service area of the AMF,
wherein the second request is used for resuming all or part of previously suspended TNLAs.

7. The method of claim 6, wherein the second request at least comprises: a message type, a global radio access network node identifier, or an AMF identifier.

8. The method of any one of claims 1 to 7, wherein the suspension of all or part of the TNLAs is stopping transmitting interface signaling and/or user data through the TNLAs within a specified period, wherein the specified period is determined based on ephemeris information of the satellite where the on-board network device is deployed.

9. The method of claim 8, wherein a survival period of the all or part of the TNLAs is controlled by a timer configured by the all or part of the TNLAs, and a period of the timer is slightly longer than the specified period.

10. A method for managing next generation, NG, interface connection, performed by an access and mobility management function, AMF, comprising:
receiving a first request transmitted from an on-board network device; and
storing a context of an established NG interface connection between the on-board network device and the AMF within a configured time threshold,
wherein the first request is used for indicating suspension of all or part of transport network layer associations, TNLAs, on the NG interface.

11. The method of claim 10, wherein the suspension of all or part of the TNLAs on the NG interface is determined by indication information carried in the first request, or is determined in case that the NG interface connection between the on-board network device and the AMF is established.

12. The method of claim 10, wherein before receiving the first request transmitted from then on-board network device, the method further comprises:
receiving an NG interface establishment request transmitted from the on-board network device, wherein the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

13. The method of claim 10, wherein the all TNLAs comprise a TNLA for user data transmission and a TNLA for interface signaling transmission, and the part of the TNLAs is a TNLA for interface signaling transmission.

14. The method of claim 10, wherein the configured time threshold is determined based on ephemeris information of the satellite where the on-board network device is deployed, to indicate when the on-board network device is capable of re-serving the service area of the AMF.

15. The method of claim 10, further comprising:
receiving a second request transmitted from the on-board network device; and
transmitting a second response message to the on-board network device, wherein the second response message is used for indicating whether the all or part of the TNLAs are resumed,
wherein the second request is used for resuming all or part of previously suspended TNLAs.

16. The method of claim 15, further comprising:
in case of determining that the all TNLAs suspended between the on-board network device and the AMF are resumed,
transmitting a first next generation application protocol, NGAP, message to the on-board network device, wherein the first NGAP message is used for adding the TNLAs; or
transmitting a second NGAP message to the on-board network device, wherein the second NGAP message is used for notifying the on-board network device to update a configuration parameter of the NG interface.

17. The method of claim 15, further comprising:
in case of determining that the part of the TNLAs suspended between the on-board network device and the AMF are resumed,
transmitting a third NGAP message to the on-board network device, wherein the third NGAP message is used for creating a user signaling TNLA corresponding to the part of the TNLAs, and the third NGAP message is transmitted through the resumed part of the TNLAs.

18. The method of any one of claims 10 to 17, wherein the suspension of all or part of the TNLAs is stopping transmitting interface signaling or user data through the TNLAs within a specified period, wherein the specified period is determined based on ephemeris information of the satellite where the on-board network device is deployed.

19. The method of claim 18, wherein a survival period of the all or part of the TNLAs is controlled by a timer configured by the all or part of the TNLAs, and a period of the timer is slightly longer than the specified period.

20. An on-board network device, comprising a memory, a transceiver and a processor,
wherein the memory is used for storing a computer program; the transceiver is used for transmitting and receiving data under control of the processor; and the processor is used for reading the computer program in the memory and performing the following operations of:
transmitting a first request to an access and mobility management function, AMF, in case of determining that the on-board network device that has established an NG interface connection does not serve a service area of the AMF; and
storing a context of the established NG interface connection between the on-board network device and the AMF,
wherein the first request is used for indicating suspension of all or part of transport network layer associations, TNLAs, on the NG interface.

21. The on-board network device of claim 20, wherein the suspension of all or part of the TNLAs on the NG interface is determined by indication information carried in the first request, or is determined in case that the NG interface connection between the on-board network device and the AMF is established.

22. The on-board network device of claim 20, wherein before transmitting the first request to the AMF in case of determining that the on-board network device that has established the NG interface connection does not serve the service area of the AMF, the operations further comprise:
transmitting an NG interface establishment request to an AMF within a service area of the on-board network device, wherein the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface when the on-board network device no longer serves the service area of the AMF; and
the response message of the NG interface establishment request is used for indicating whether the AMF allows to suspend all or part of the TNLAs on the NG interface.

23. The on-board network device of claim 20, wherein the all TNLAs comprise a TNLA for user data transmission and a TNLA for interface signaling transmission, and the part of the TNLAs is a TNLA for interface signaling transmission.

24. The on-board network device of claim 20, wherein determining that the on-board network device that has established the NG interface connection does not serve the service area of the AMF comprises one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, wherein the instruction indicates that the on-board network device no longer serves the AMF.

25. The on-board network device of claim 20, wherein the operations further comprise:
transmitting a second request to the AMF in case that the on-board network device is capable of re-serving the service area of the AMF,
wherein the second request is used for resuming all or part of previously suspended TNLAs.

26. The on-board network device of claim 25, wherein the second request at least comprises: a message type, a global radio access network node identifier, or an AMF identifier.

27. The on-board network device of any one of claims 20 to 26, wherein the suspension of all or part of the TNLAs is stopping transmitting interface signaling and/or user data through the TNLAs within a specified period, wherein the specified period is determined based on ephemeris information of the satellite where the on-board network device is deployed.

28. The on-board network device of claim 27, wherein a survival period of the all or part of the TNLAs is controlled by a timer configured by the all or part of the TNLAs, and a period of the timer is slightly longer than the specified period.

29. An access and mobility management function, AMF, electronic device, comprising a memory, a transceiver and a processor,
wherein the memory is used for storing a computer program; the transceiver is used for transmitting and receiving data under control of the processor; and the processor is used for reading the computer program in the memory and performing the following operations of:
receiving a first request transmitted from an on-board network device; and
storing a context of an established NG interface connection between the on-board network device and the AMF within a configured time threshold,
wherein the first request is used for indicating suspension of all or part of transport network layer associations, TNLAs, on the NG interface.

30. The AMF of claim 29, wherein the suspension of all or part of the TNLAs on the NG interface is determined by indication information carried in the first request, or is determined in case that the NG interface connection between the on-board network device and the AMF is established.

31. The AMF of claim 29, wherein before receiving the first request transmitted from the on-board network device, the operations further comprise:
receiving an NG interface establishment request transmitted from the on-board network device, wherein the NG interface establishment request carries first indication information;
transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

32. The AMF of claim 29, wherein the all TNLAs comprise a TNLA for user data transmission and a TNLA for interface signaling transmission, and the part of the TNLAs is a TNLA for interface signaling transmission.

33. The AMF of claim 29, wherein the configured time threshold is determined based on ephemeris information of the satellite where the on-board network device is deployed, to indicate when the on-board network device is capable of re-serving the service area of the AMF.

34. The AMF of claim 29, wherein the operations further comprise:
receiving a second request transmitted from the on-board network device; and
transmitting a second response message to the on-board network device, wherein the second response message is used for indicating whether the all or part of the TNLAs are resumed,
wherein the second request is used for resuming all or part of previously suspended TNLAs.

35. The AMF of claim 34, wherein the operations further comprise:
in case of determining that the all TNLAs suspended between the on-board network device and the AMF are resumed,
transmitting a first next generation application protocol, NGAP, message to the on-board network device, wherein the first NGAP message is used for adding the TNLAs; or
transmitting a second NGAP message to the on-board network device, wherein the second NGAP message is used for notifying the on-board network device to update a configuration parameter of the NG interface.

36. The AMF of claim 34, wherein the operations further comprise:
in case of determining that the part of the TNLAs suspended between the on-board network device and the AMF are resumed,
transmitting a third NGAP message to the on-board network device, wherein the third NGAP message is used for creating a user signaling TNLA corresponding to the part of the TNLAs, and the third NGAP message is transmitted through the resumed part of the TNLAs.

37. The AMF of any one of claims 29 to 36, wherein the suspension of all or part of the TNLAs is stopping transmitting interface signaling and/or user data through the TNLAs within a specified period, wherein the specified period is determined based on ephemeris information of the satellite where the on-board network device is deployed.

38. The AMF of claim 37, wherein a survival period of the all or part of the TNLAs is controlled by a timer configured by the all or part of the TNLAs, and a period of the timer is slightly longer than the specified period.

39. An apparatus for managing next generation, NG, interface connection, comprising:
a first transmitting module, used for transmitting a first request to an access and mobility management function, AMF, in case of determining that the on-board network device that has established an NG interface connection does not serve a service area of the AMF; and
a first storing module, used for storing a context of the established NG interface connection between the on-board network device and the AMF,
wherein the first request is used for indicating suspension of all or part of transport network layer associations, TNLAs, on the NG interface.

40. The apparatus of claim 39, wherein the suspension of all or part of the TNLAs on the NG interface is determined by indication information carried in the first request, or is determined in case that the NG interface connection between the on-board network device and the AMF is established.

41. The apparatus of claim 39, wherein the first transmitting module is further used for:
transmitting an NG interface establishment request to an AMF within a service area of the on-board network device, wherein the NG interface establishment request carries first indication information;
receiving a response message of the NG interface establishment request transmitted from the AMF; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface when the on-board network device no longer serves the service area of the AMF; and
the response message of the NG interface establishment request is used for indicating whether the AMF allows to suspend all or part of the TNLAs on the NG interface.

42. The apparatus of claim 39, wherein the all TNLAs comprise a TNLA for user data transmission and a TNLA for interface signaling transmission, and the part of the TNLAs is a TNLA for interface signaling transmission.

43. The apparatus of claim 39, wherein determining that the on-board network device that has established the NG interface connection does not serve the service area of the AMF comprises one or more of the following modes:
a beam coverage area of the on-board network device does not overlap with the service area of the AMF;
a position determined based on a motion trajectory of an asynchronous satellite where the on-board network device is deployed is not within the service area of the AMF; and
an instruction from a satellite operation control system or a network management system is received, wherein the instruction indicates that the on-board network device no longer serves the AMF.

44. The apparatus of claim 39, wherein the first transmitting module is further used for:
transmitting a second request to the AMF in case that the on-board network device is capable of re-serving the service area of the AMF,
wherein the second request is used for resuming all or part of previously suspended TNLAs.

45. The apparatus of claim 44, wherein the second request at least comprises: a message type, a global radio access network node identifier, or an AMF identifier.

46. The apparatus of any one of claims 39 to 45, wherein the suspension of all or part of the TNLAs is stopping transmitting interface signaling and/or user data through the TNLAs within a specified period, wherein the specified period is determined based on ephemeris information of the satellite where the on-board network device is deployed.

47. The apparatus of claim 46, wherein a survival period of the all or part of the TNLAs is controlled by a timer configured by the TNLA, and a period of the timer is slightly longer than the specified period.

48. An apparatus for managing next generation, NG, interface connection, comprising:
a second receiving module, used for receiving a first request transmitted from an on-board network device; and
a second storing module, used for storing a context of an established NG interface connection between the on-board network device and the AMF within a configured time threshold,
wherein the first request is used for indicating suspension of all or part of transport network layer associations, TNLAs, on the NG interface.

49. The apparatus of claim 48, wherein the suspension of all or part of the TNLAs on the NG interface is determined by indication information carried in the first request, or is determined in case that the NG interface connection between the on-board network device and the AMF is established.

50. The apparatus of claim 48, wherein the apparatus further comprises a second transmitting module,
wherein the second receiving module is further used for receiving an NG interface establishment request transmitted from the on-board network device, wherein the NG interface establishment request carries first indication information; and
the second transmitting module is used for transmitting a response message of the NG interface establishment request to the on-board network device; and
determining, based on the response message of the NG interface establishment request, whether to suspend all or part of the TNLAs on the NG interface in case of determining that the on-board network device that has established the NG interface connection does not serve the service area of the AMF,
wherein the first indication information is used for indicating the AMF to suspend all or part of the TNLAs on the NG interface between the on-board network device and the AMF in case that the on-board network device no longer serves the service area of the AMF; and
the response message of the NG interface establishment request is used for indicating whether the AMF allows to suspend all or part of the TNLAs on the NG interface.

51. The apparatus of claim 48, wherein the all TNLAs comprise a TNLA for user data transmission and a TNLA for interface signaling transmission, and the part of the TNLAs is a TNLA for interface signaling transmission.

52. The apparatus of claim 48, wherein the configured time threshold is determined based on ephemeris information of the satellite where the on-board network device is deployed, to indicate when the on-board network device is capable of re-serving the service area of the AMF.

53. The apparatus of claim 48, further comprising a second transmitting module,
wherein the second receiving module is further used for receiving a second request transmitted from the on-board network device; and
the second transmitting module is used for transmitting a second response message to the on-board network device, wherein the second response message is used for indicating whether the all or part of the TNLAs are resumed,
wherein the second request is used for resuming all or part of previously suspended TNLAs.

54. The apparatus of claim 53, wherein the second transmitting module is further used for:
in case of determining that the all TNLAs suspended between the on-board network device and the AMF are resumed,
transmitting a first next generation application protocol, NGAP, message to the on-board network device, wherein the first NGAP message is used for adding the TNLAs; or
transmitting a second NGAP message to the on-board network device, wherein the second NGAP message is used for notifying the on-board network device to update a configuration parameter of the NG interface.

55. The apparatus of claim 53, wherein the second transmitting module is further used for:
in case of determining that the part of the TNLAs suspended between the on-board network device and the AMF are resumed,
transmitting a third NGAP message to the on-board network device, wherein the third NGAP message is used for creating a user signaling TNLA corresponding to the part of the TNLAs, and the third NGAP message is transmitted through the resumed part of the TNLAs.

56. The apparatus of any one of claims 48 to 55, wherein the suspension of all or part of the TNLAs is stopping transmitting interface signaling and/or user data through the TNLAs within a specified period, wherein the specified period is determined based on ephemeris information of the satellite where the on-board network device is deployed.

57. The apparatus of claim 56, wherein a survival period of the all or part of the TNLAs is controlled by a timer configured by the TNLA, and a period of the timer is slightly longer than the specified period.

58. A processor readable storage medium, wherein the processor readable storage medium stores a computer program for causing the processor to perform any one of the methods of claims 1 to 9.

59. A processor readable storage medium, wherein the processor readable storage medium stores a computer program for causing the processor to perform any one of the methods of claims 10 to 19.
